# EUROPÄISCHE PATENTSCHRIFT

(11) **EP 2 088 335 B1**
(45) Veröffentlichungstag und Bekanntmachung des Hinweises auf die Patenterteilung: **15.04.2015**
(21) Anmeldenummer: 09001590.0
(22) Anmeldetag: 05.02.2009
(51) Int. Cl.: F16B 7/00, F16B 7/18, E06B 3/964

(54) **Profilverbinder**
Profile connector
Connecteur de profilés

(30) Priorität: 11.02.2008 DE 102008008695
(43) Veröffentlichungstag der Anmeldung: 12.08.2009
(73) Patentinhaber: DORMA Deutschland GmbH, 58256 Ennepetal (DE)
(72) Erfinder: Finke, Andreas, 58285 Gevelsberg (DE); Kloßas, Jens, 45739 Oer-Erkenschwick (DE); Wulbrandt, Tim, 58332 Schwelm (DE)
(74) Vertreter: Balder IP Law, S.L.

(56) Entgegenhaltungen:
- EP-A2- 1 055 796
- DE-U1- 9 406 655
- DE-U1-202006 013 250

## Beschreibung

Die Erfindung betrifft einen Verbinder für Profile insbesondere von Rahmenflügeln.

Verbinder für Profile sind aus dem Stand der Technik bekannt. So offenbart beispielsweise das Deutsche Gebrauchsmuster DE9406655U1 ein Verbindungsstück für winklig aneinanderstoßende Hohlprofilstäbe. Ein mechnisches Verbindungselement für Rahmen ist auch aus der EP1055796A2 bekannt. Ebenfalls sind Eckverbinder zum Verbinden von mindestens zwei Profilleisten z.B. aus DE202006013250U1 bekannt.

Aus der DE 20 2007 008 969 U1 ist ein Profilverbinder in Form eines Nutsteins bekannt, der zwei rechtwinklig zueinander stehende Schenkel aufweist, die in ein jeweiliges Profil eingeschoben werden. Die beiden miteinander zu verbindenden Profile sind an ihren zugewandten Stirnseiten um 45°abgeschrägt, so dass sie im Montagezustand einen rechten Winkel einschließen. Das bedeutet, dass die Profile und der Nutsteins so präzise gearbeitet sein müssen, dass die beiden Profile im Montagezustand bündig miteinander abschließen. Beim Montieren müssen die beiden Profile nach und nach auf den Nutstein geschoben und präzise zueinander bewegt werden. Dies macht eine enorm präzise Positionierung sowohl der Profile als auch das Nutsteins erforderlich.

Aufgabe der Erfindung ist es, einen Profilverbinder zu schaffen, der eine einfache Montage von miteinander zu verbindenden Profilen ermöglicht und einfach im Aufbau ist.

Diese Aufgabe **wird** durch den Gegenstand des Anspruchs 1 gelöst. Vorteilhafte Weiterbildungen der Erfindung sind in den Unteransprüchen angegeben,

Der Profilverbinder weist eine Basis und zumindest zwei elastisch verformbare Vorsprünge auf. Die beiden Vorsprünge sind an der Basis angesetzt bzw. gehen von dieser ab und erstrecken sich im Wesentlichen in eine selbe Richtung. Die beiden elastischen Vorsprünge ermöglichen es, den Profilverbinder in ein Profil einzuschieben. Aufgrund der Elastizität der Vorsprünge ist es möglich, dass sich der Profilverbinder beim Einschieben in das Profil mit diesem verspannt.

Vorzugsweise weist der erfindungsgemäße Profilverbinder zusätzlich in Abschnitten, von denen kein Vorsprung abgeht, Durchgangsöffnungen auf. Die Durchgangsöffnungen erstrecken sich parallel zu der Erstreckungsrichtung der Vorsprünge. D. h. die Vorsprünge und die Durchgangsöffnungen erstrecken sich im Wesentlichen in dieselbe Richtung. Die Durchgangsöffnungen ermöglichen eine Befestigung anderer Teile an dem Profilverbinder. Insbesondere ist es möglich, ein anderes Profil auf die Basis des Profilverbinders aufzustecken und mit den Durchgangsöffnungen des Profilverbinders zu verschrauben.

Alternativ oder zusätzlich werden die Schrauben durch die Durchgangsöffnungen hindurchgehend mit dem einen Profil verschraubt. Damit sind die beiden, miteinander zu verbindenden Profile montiert, wodurch eine sehr einfache und schnelle Montage bereitgestellt ist. Dies hat insbesondere Vorteile bei der Montage von Profilen zu einem Rahmen beispielsweise von Tür- oder Fensterflügeln.

Zusätzlich kann zumindest einer der Vorsprünge des Profilverbinders eine Durchgangsöffnung aufweisen, die sich parallel zur Erstreckungsrichtung dieses Vorsprungs erstreckt. Dadurch ist es möglich, beispielsweise eine Schraube hinein zu schrauben, die den Vorsprung aufweitet. Damit kann auf einfache Weise ein (zusätzliches) Verspannen dieses Vorsprungs im ersten Profil erreicht werden. Anstelle der Schraube kann beispielsweise auch ein Stift beispielsweise in Form eines Nagels hinein getrieben werden.

Vorteilhafterweise weist jeder mit einer Durchgangsöffnung versehene Vorsprung zumindest einen Schlitz auf, der sich parallel zur Erstreckungsrichtung der Durchgangsöffnung erstreckt. Dieser Schlitz erleichtert ein Aufweiten dieses Vorsprungs. Anstelle eines oder mehrerer Schlitze kann der Vorsprung an einer oder mehreren Stellen, im Querschnitt gesehen, dünner ausgebildete Bereiche als Sollbruchstellen aufweisen. Bei einem Hineinschreiben einer Schraube oder dergleichen brechen diese Bereiche auf, so dass jeweils ein Schlitz entsteht.

Vorzugsweise weist zumindest eine der Durchgangsöffnungen zudem ein Innengewinde auf. Dies ermöglicht, beispielsweise Schrauben mit metrischem Gewinde in die jeweilige Durchgangsöffnung einzuschrauben.

Weitere Merkmale und Vorteile der Erfindung ergeben sich aus der nachfolgenden Beschreibung bevorzugter Ausführungsformen.

Es zeigen:
- Figur 1: einen Profilverbinder gemäß einer ersten Ausführungsform,

- Figur 2: einen Profilverbinder gemäß einer ersten Ausführungsform der Erfindung,
- Figur 3: einen Profilverbinder gemäß einer zweiten Ausführungsform der Erfindung,
- Figur 4: eine erste Verbindung zwischen einem ersten Profil und einem zweiten Profil,
- Figur 5: eine Abwandlung der Verbindung zwischen dem ersten Profil sowie dem zweiten Profil von Figur 4 und
- Figur 6: eine zweite Verbindung zwischen einem ersten Profil und einem zweiten Profil.

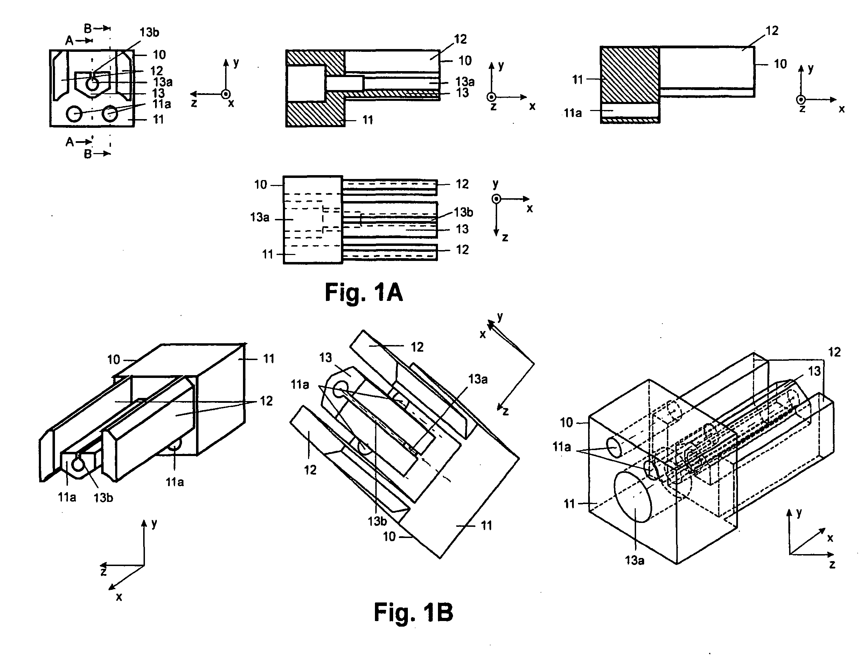

Figur 1A zeigt einen Profilverbinder 10 gemäß einer ersten Ausführungsform der Erfindung in verschiedenen Ansichten. Links in Figur 1A ist eine Vorderansicht des Profilverbinders 10 gezeigt. Oben in der Mitte ist der Profilverbinder 10 entlang einer Schnittlinie A - A links in Figur 1A dargestellt, wohingegen rechts in Figur 1A der Profilverbinder 10 entlang einer Schnittlinie B - B links in Figur 1A dargestellt ist. Im unteren Teil von Figur 1A ist der Profilverbinder 10 von oben gezeigt. Figur 1B zeigt den Profilverbinder 10 in verschiedenen perspektivischen Ansichten.

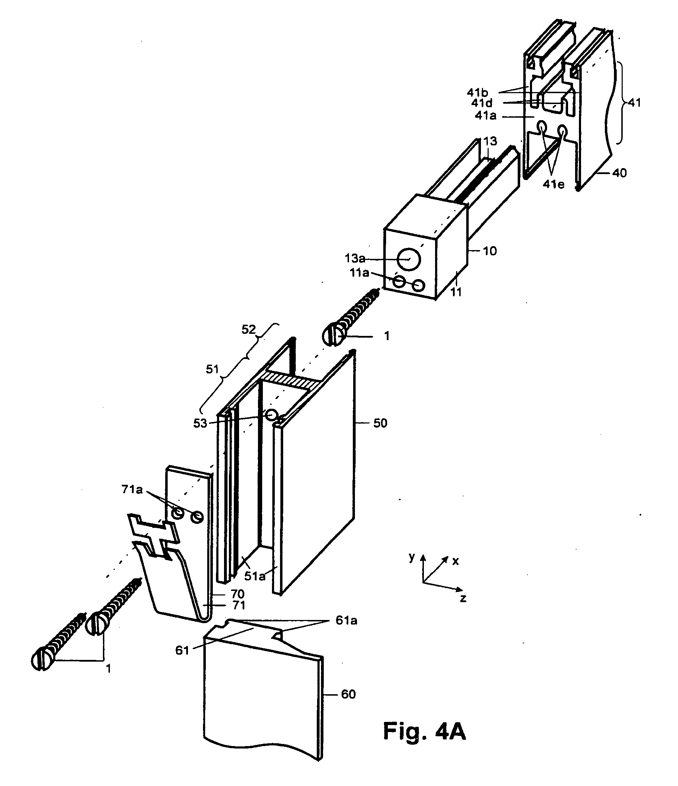

Der Profilverbinder 10 umfasst eine Basis 11, die vorzugsweise blockförmig ausgebildet ist. An einer Seite der Basis 11 sind Vorsprünge 12, 12 angeformt, die zueinander im Wesentlichen parallel verlaufen und einen vorbestimmten Abstand aufweisen. Die Vorsprünge 12, 12 sind vorgesehen, in einen Zwischenraum eines ersten Profils 40 eingeschoben zu werden, der mittels eines Wandabschnitts 41 b einer Basis 41a und eines Innenwandabschnitts 41 d des ersten Profils 40 gebildet ist (vgl. Figur 4A). Die Vorsprünge 12, 12 sind vorzugsweise so geformt, dass sie sich im jeweiligen Zwischenraum verklemmen. Im einfachsten Fall erfolgt dies dadurch, dass die Vorsprünge 12, 12 Querabmessungen aufweisen oder zueinander einen derartigen Abstand haben, die bzw. der jeweils größer sind oder ist als jeweilige Innenabmessungen des jeweiligen Zwischenraums. Die Vorsprünge 12, 12 sind elastisch ausgebildet.

Alternativ oder zusätzlich weist der Profilverbinder 10 einen Vorsprung 13 auf, der ebenfalls an einer Seite der Basis 11 angeformt ist.

Die Vorsprünge 12, 13 weisen im Querschnitt vorzugsweise eine unrunde Innenkontur auf, sodass der Profilverbinder 10 bei einem Einschieben in ein Profil verdrehsicher in diesem aufgenommen ist.

Im Falle der zusätzlichen Ausbildung ist der Vorsprung 13 zwischen den Vorsprüngen 12, 12 im Abstand zu diesen angeordnet. Der Vorsprung 13 ist an derselben Seite der Basis 11 angeformt, an der auch die Vorsprünge 12, 12 angeformt sind, und erstreckt sich im Wesentlichen parallel zu den Vorsprüngen 12, 12. Der Vorsprung 13 wird bei einem Einsetzen des Profilverbinders 10 in das erste Profil 40 in einem Zwischenraum eingeschoben, der mittels Innenwandabschnitten 41d, 41d und der Basis 41 a gebildet ist. Der Vorsprung 13 kann sich analog zu den Vorsprüngen 12, 12 in diesem Zwischenraum mit dem ersten Profil 40 verklemmen.

Alternativ oder zusätzlich weist der Vorsprung 13 zumindest einen Schlitz 13b auf, der sich entlang vorzugsweise einer Gesamtlänge des Vorsprungs 13 erstreckt. Der Vorsprung 13 weist ferner mittig eine Durchgangsöffnung 13a auf, die sich, im Querschnitt gesehen, an den Schlitz 13b anschließt. D. h. der Schlitz 13b und die Durchgangsöffnung 13a sind miteinander verbunden. Die Durchgangsöffnung 13a dient dem Einschrauben einer nicht dargestellten Schraube. Beim Einschrauben einer Schraube werden die mittels des Schlitzes 13b gebildeten freien Endabschnitte des Vorsprungs 13, im Querschnitt gesehen, auseinander gedrückt und können somit mit innenwandabschnitten 41d, 41d eines jeweiligen ersten Profils 40 verspannt werden.

Aufgrund der Vorsprünge 12, 13 wird der Profilverbinder 10 somit im ersten Profil 40 verdrehsicher und vorzugsweise herausfallsicher aufgenommen, wobei der Profilverbinder 10 mit dem ersten Profil 40 eine feste Verbindung eingeht. Profilverbinder 10 und erstes Profil 40 bilden somit ein Befestigungsteil für ein zweites Profil 50.

Die Durchgangsöffnung 13a erstreckt sich zudem durch die Basis 11 hindurch. Dadurch ist es möglich, eine Schraube von einer Seite der Basis 11 einzuschrauben, die den Vorsprüngen 12, 13 abgewandt ist. An dieser abgewandten Seite der Basis 11 hat die Durchgangsöffnung 13a vorzugsweise einen größeren Durchmesser als im Bereich des Vorsprungs 13. Dadurch ist es möglich, die Schraube komplett mit Kopf im Profilverbinder 10, d. h. in der Basis 11, zu versenken. Damit steht der Schraubenkopf nach dem Einschrauben nicht störend aus der Basis 11 hervor.

In der Basis 11 sind vorzugsweise ferner Durchgangsöffnungen 11a, 11a zum Durchführen beispielsweise zusätzlicher Schrauben.

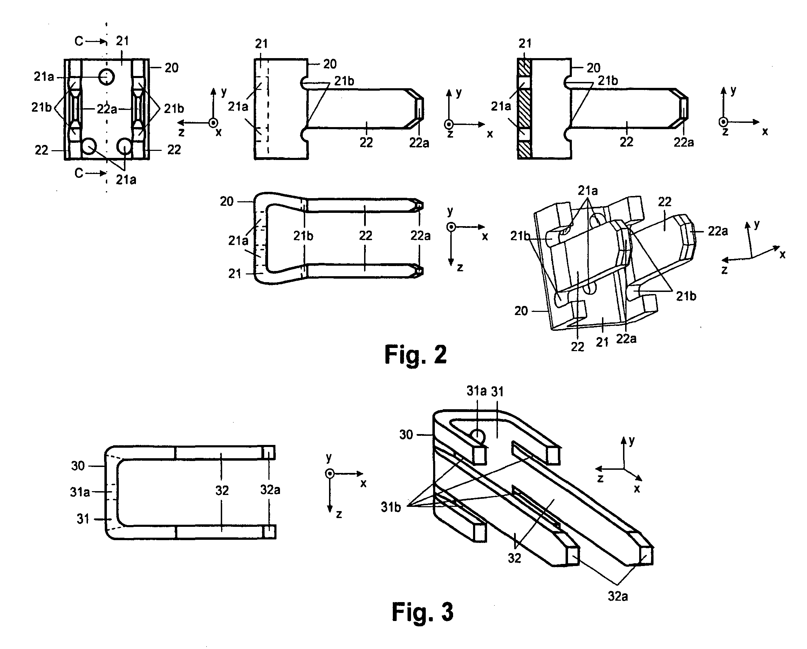

Figur 2 zeigt einen Profilverbinder 20 gemäß einer ersten Ausführungsform der Erfindung in verschiedenen Ansichten. Links in Figur 2 ist eine Vorderansicht des Profilverbinders 20 gezeigt. Oben in der Mitte ist der Profilverbinder 20 in einer Seitenansicht gezeigt, wohingegen rechts oben in Figur 2 der Profilverbinder 20 entlang einer Schnittlinie C - C links in Figur 2 dargestellt ist. Unten mittig in Figur 2 ist der Profilverbinder 20 von oben gezeigt. Rechts unten zeigt Figur 2 den Proflverbinder 20 in einer perspektivischen Ansicht.

Der Profilverbinder 20 weist eine Basis 21 auf, die relativ flach ausgebildet ist. Die Basis 21 weist einen Mittenabschnitt auf, der im Wesentlichen ebene Außenflächen aufweist. An zwei gegenüberliegenden Seiten des Mittenabschnitts schließen sich zwei Schenkelabschnitte an, die derart gebogen ausgebildet sind, dass sie sich zunächst voneinander weg erstrecken und nachfolgend aufeinander zu verlaufen. Vorsprünge 22, 22 schließen sich an die Schenkelabschnitte an, weisen vorzugsweise eine selbe Länge auf und verlaufen zueinander vorzugsweise im Wesentlichen parallel. Jeder Vorsprung 22 weist vorzugsweise an seinem freien Ende einen Einführungsabschnitt 22a auf. Jeder Einführungsabschnitt 22a ist vorzugsweise konisch derart ausgebildet, sodass ein Einschieben des Profilverbinders 20 in ein erstes Profil 40 leichter vonstatten geht. Die konische Form kann mittels vorzugsweise ebener Schrägflächen, die insbesondere unten rechts in Figur 2 zu erkennen sind, oder auch mittels konvex gekrümmter Außenflächen gebildet sein. Die Vorsprünge 22, 22 sind ähnlich dem Profilverbinder 10 aus elastischem Material gebildet, sodass sie sich mit dem jeweiligen ersten Profil 40 verklemmen bzw. verspannen. Das Verklemmen erfolgt vorteilhafterweise dadurch, dass die Vorsprünge 22, 22 aufgrund eines jeweiligen Profils 40 zusammen oder auseinander gedrückt werden. Rückstellkräfte des elastischen Materials führen zum Verspannen des Profilverbinders 20 im jeweiligen Profil 40.

Die Basis 21 weist ähnlich dem Profilverbinder 10 an jeweiligen Stellen Durchgangsöffnungen 21 a, 21 a, 21 a auf. Die links in Figur 2 unten angeordneten Durchgangsöffnungen 21 a, 21 a haben die gleiche Funktion wie die Durchgangsöffnungen 11a, 11a des vorstehend beschriebenen Profilverbinders 10. Die obere Durchgangsöffnung 21 a hat die gleiche Funktion wie die vorbeschriebene Durchgangsöffnung 13a.

Vorteilhafterweise weisen die Vorsprünge 22, 22 eine geringere Höhe als die Basis 21 auf. In den Bereichen, in denen die Vorsprünge 22, 22 an der Basis 21 angeformt sind, weist die Basis 21 beidseitig des jeweiligen Vorsprungs 22 vorzugsweise jeweils eine Ausnehmung 21 b auf. Bei einem Einschieben in ein erstes Profil 40 kommt die Basis 21 mit ihren diesem ersten Profil 40 zugewandten Flächen mit ebenjenem Profil 40 zur Anlage. D. h. Flächen der Basis 21 stoßen gegen eine Stirnfläche bzw -seite des ersten Profils 40. Im Anformungsbereich der Vorsprünge 22, 22 weist die Stirnseite des ersten Profils 40 somit zwangsläufig Ecken auf. Diese Ecken können beispielsweise Grate aufweisen oder nicht präzise rechtwinklig ausgebildet sein. Derartige Ungenauigkeiten können mittels der Ausnehmungen 21 b, 21 b, 21 b, 21 b in gewissem Maße ausgeglichen werden, was zu einer größeren Fehlertoleranz des Profilverbinders 20 führt.

Figur 3 zeigt einen Profilverbinder 30 gemäß einer zweiten Ausführungsform der Erfindung. Er ist ähnlich dem Profilverbinder 20 ausgebildet. Anstelle von Ausnehmungen 21 b, 21 b, 21 b, 21 b sind Schlitze 31 b, 31 b, 31 b, 31b ausgebildet. Im Vergleich zu einer entsprechenden Ausnehmung 21b erstreckt sich ein jeweiliger Schlitz 31 b wesentlich tiefer in eine Basis 31 des Profilverbinders 30 hinein. Analog zum Profilverbinder 20 sind Durchgangsöffnungen 31 a sowie Vorsprünge 32, 32 ausgebildet. Jeder Vorsprung 32 weist an seinem freien Ende einer Einführungsabschnitt 32a auf. Im Gegensatz zum Profilverbinder 20 gehen Schenkelabschnitte der Basis 31 und die Vorsprünge 32, 32 jeweils nahezu im rechten Winkel von einem Mittenabschnitt der Basis 31 ab und verlaufen zueinander parallel. Ein Verspannen des Profilverbinders 30 erfolgt analog dem Profilverbinder 20.

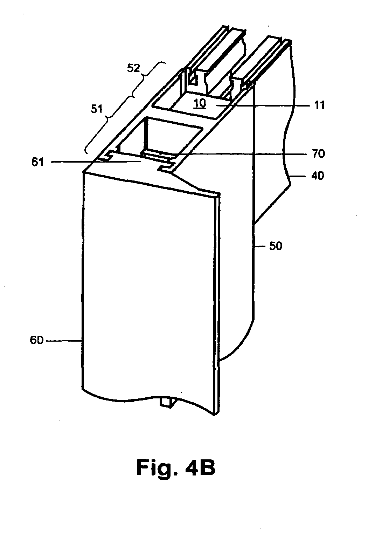

Figur 4 zeigt exemplarisch für den Profilverbinder 10 das Verbinden eines ersten Profils 40 mittels des Profilverbinders 10 mit einem zweiten Profil 50 in einem oberen Bereich eines Rahmens für beispielsweise einen Glas-Türflügel. Der Profilverbinder 10 wird in einem ersten Schritt stirnseitig in das erste Profil 40 eingeschoben.

Vorteilhafterweise verspannt sich der Profilverbinder 10 bereits in einem vorbestimmten Maß mit dem ersten Profil 40, sodass in einem nachfolgenden Schritt das zweite Profil 50 mit einem Aufnahmeabschnitt 52 in einem Winkel von vorzugsweise 90° zum ersten Profil 40 auf die Basis 11 des Profilverbinders 10 aufgeschoben werden kann, ohne die Gefahr einzugehen, dass sich der Profilverbinder 10 vom ersten Profil 40 lösen könnte.

Alternativ wird eine erste, in Figur 4A mittig dargestellte Schraube 1 durch die Durchgangsöffnung 13a hindurch in den Vorsprung 13 eingeschraubt, woraufhin sich der Vorsprung 13 aufspreizt und den Profilverbinder 10 im ersten Profil 40 sicher verspannt. Daraufhin wird das zweite Profil 50 in einem Winkel von 90° zum ersten Profil 40 auf die Basis 11 mit seinem Aufnahmeabschnitt 52 aufgesetzt bzw. aufgeschoben.

Das Aufsetzen des zweiten Profils 50 erfolgt derart, dass Durchgangsöffnungen 53 mit korrespondierenden Durchgangsöffnungen 11a, 11a der Basis 11 des Profilverbinders 10 fluchten.

Zusätzlich kann eine Klemmfeder 70, auf die später eingegangen wird, in einen Anbringabschnitt 51 des zweiten Profils 50 derart eingesetzt werden, dass Durchgangsöffnungen 71a, 71a eines Befestigungsabschnitts 71 der Klemmfeder 70 mit korrespondierenden Durchgangsöffnungen 53 des zweiten Profils 50 fluchten.

Nun werden, gemäß Figur 4A zwei, Befestigungsschrauben 1, 1 durch eine jeweilige Durchgangsöffnungsanordnung (71a,) 53, 11a hindurch in einen jeweiligen Schraubkanal 41e des ersten Profils 40 eingeschraubt. Damit sind alle Teile (70,) 40, 50 sicher am ersten Profil 40 befestigt und können so zwei Seiten eines Rahmens für beispielsweise einen Glasflügel bilden.

Abschließend kann noch ein Seitendichtungsprofil 60 mittels eines Befestigungsteils 61 stirnseitig in das zweite Profil 50 in Endabschnitte von Wandabschnitten 51 a, 51 a des zweiten Profils 50 eingeschoben werden. Der Befestigungsteil 61 weist Anbringabschnitte 61a, 61a in Form von Vorsprüngen auf, die so ausgebildet sind, dass sie in Nuten der Endabschnitte der Wandabschnitte 51a, 51a eines Anbringabschnitts 51 des Profilverbinders 50 eingreifen.

Figur 4B zeigt die Teile von Figur 4A im Montagezustand.

Im in Figuren 4A und 4B gezeigten Beispiel wirken die Profile 40, 50 im Montagezustand für einen Betrachter von außen rechteckig. Allerdings gibt es Profilverbindungen, bei denen zwei miteinander verbundene Profile mit im Wesentlichen in einem Winkel von 45° zu einer Längserstreckung des jeweiligen Profils abgeschrägten Stirnflächen aneinander stoßen, was bei einem vollständigen Rahmen zu einem optisch stimmigen Gesamteindruck führt.

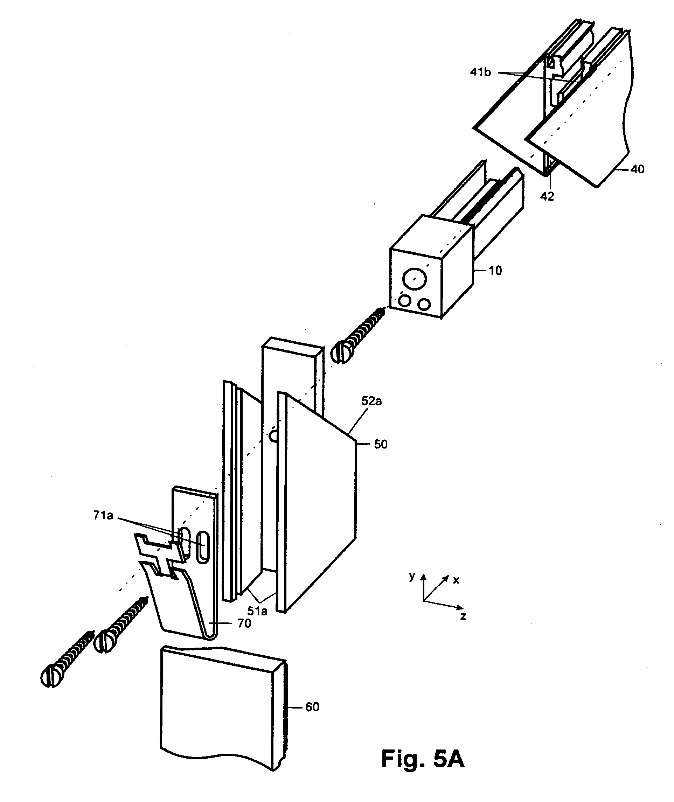

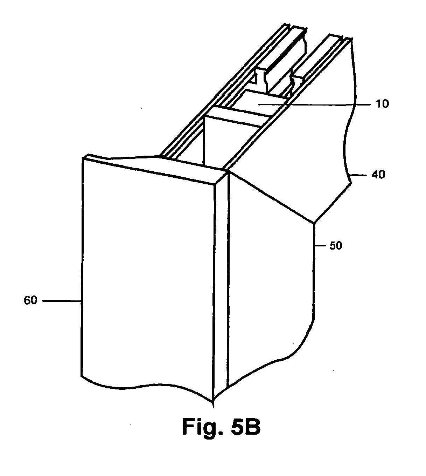

Gemäß einer anderen, in Figuren 5A und 5B gezeigten Variante sind zu dem Zweck Seitenwände 41 b, 42 und 51 a, 52a zweier miteinander zu verbindender Profile 40, 50 in Bezug auf deren jeweilige Längserstreckung abgeschrägt. Dabei stehen die Seitenwände 41 b, 42 über der Stirnfläche des ersten Profils 40 hervor, wohingegen die Seitenwände 51a, 52a des zweiten Profils 50 in Bezug auf die vorherige Ausführung dreieckige Ausschnitte aufweisen. Dadurch ist es möglich, die Profile 40, 50 weiterhin wie beschrieben mittels Profilverbindern 10, 20, 30 zusammenzusetzen. Die optische Wirkung ist im Ergebnis analog der mittels der vorstehend beschriebenen abgeschrägten Stirnflächen realisierten Wirkung.

Die Klemmfeder 70 weist anstelle von kreisrunden langlochförmige Durchgangsöffnungen 71 a, 71 a auf, was eine Anordnung der Klemmfeder 70 in verschiedenen Positionen in Bezug auf das zweite Profil 50 ermöglicht.

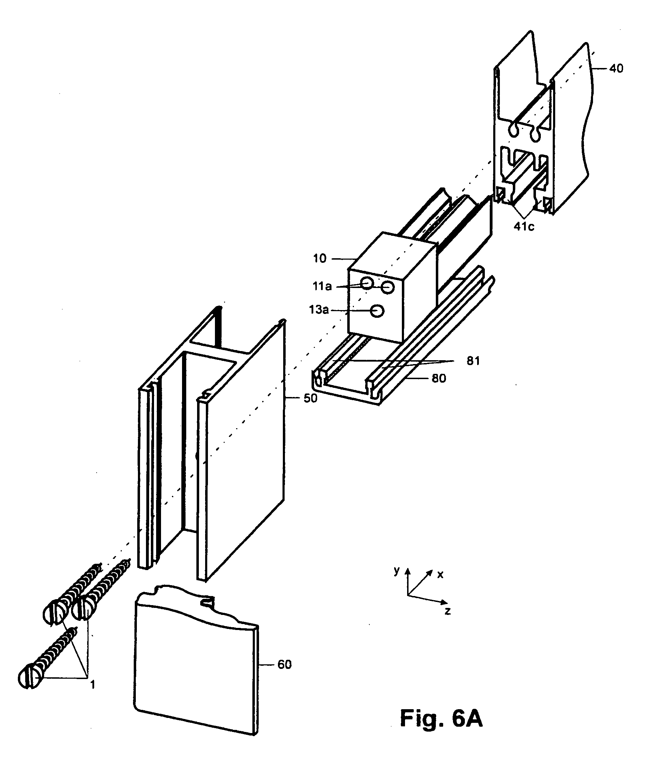

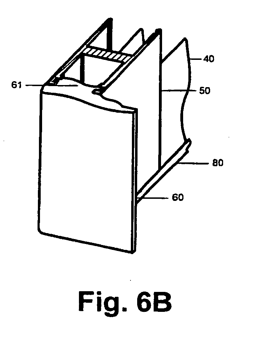

Figur 6 zeigt exemplarisch für den Profilverbinder 10 das Verbinden des ersten Profils 40 mittels des Profilverbinders 10 mit einem zweiten Profil 50 nunmehr in einem unteren Bereich des vorgenannten Rahmens. Das erste Profil 40 und der Profilverbinder 10 sind im Gegensatz zu Figur 4 um 180° um die x-Koordinatenachse rotiert angeordnet. Im Gegensatz zu Figur 4A wird hier keine Klemmfeder 70 angebracht. Allerdings ist es ohne Probleme möglich, eine derartige Klemmfeder 70 analog zu Figur 4A am zweiten Profil 50 anzubringen. Zusätzlich zum Profilverbinder 10 wird ein Abdeckprofil 80 mit Führungsabschnitten 81, 81 in Endabschnitte 41 c, 41 c des ersten Profils 40 eingeschoben. Danach erfolgt die Montage des zweiten Profils 50 und des Seitendichtungsprofils 60 im Wesentlichen analog der Beschreibung zu Figur 4A.

Die Durchgangsöffnung 13a des Profilverbinders 10 weist im gezeigten Beispiel einen Durchmesser auf, der im Wesentlichen einem Durchmesser der Durchgangsöffnungen 11a des Profilverbinders 10 entspricht. D. h. die erste Befestigungsschraube 1 wird nicht gemäß Figur 4A direkt nach dem Einschieben des Profilverbinders 10 in das erste Profil 40 eingeschraubt sondern erst, nachdem auch das zweite Profil 50 entsprechend positioniert ist, dann zusätzlich durch eine entsprechende, zusätzliche Durchgangsöffnung 53 im zweiten Profil 50 durch die Durchgangsöffnung 13a in den Vorsprung 13 hinein.
Figur 6A zeigt die Anordnung aller Teile in Explosionsansicht, wohingegen Figur 6B die Anordnung im Montagezustand zeigt.

Anstelle des Einschiebens des Abdeckprofils 80 kann es auch der Montage des zweiten Profils 50 am ersten Profil 40 nachfolgend von unten in das erste Profil 40 geklipst werden, sofern die Abschnitt 81, 81 dies zulassen. Dies kann beispielsweise dadurch erfolgen, dass die Führungsabschnitte 81, 81 keinen rechteckigen Querschnitt sondern einen Querschnitt in Form eines in Figur 5A aufrecht stehenden Dreiecks aufweisen.

Insgesamt sind die vorstehend beschriebenen Profilverbinder 10, 20, 30 einfach im Aufbau und ermöglichen eine einfache Anbringung an einem ersten Profil 40 und ferner eine einfache Montage eines jeweiligen zweiten Profils 50.

### Bezugszeichenliste

- 1: Befestigungsschraube

- 10: Profilverbinder
- 11: Basis
- 11a: Durchgangsöffnung
- 12: Vorsprung
- 13: Vorsprung
- 13a: Durchgangsöffnung
- 13b: Schlitz

- 20: Profilverbinder
- 21: Basis
- 21 a: Durchgangsöffnung
- 21 b: Ausnehmung
- 22: Vorsprung
- 22a: Einführungsabschnitt

- 30: Profilverbinder
- 31: Basis
- 31 a: Durchgangsöffnung
- 31 b: Schlitz
- 32: Vorsprung
- 32a: Einführungsabschnitt

- 40: erstes Profil
- 41: Anbringabschnitt
- 41 a: Basis
- 41 b: Wandabschnitt

- 41c: Endabschnitt
- 41 d: Innenwandabschnitt
- 41 e: Schraubkanal
- 42: Wandabschnitt

- 50: zweites Profil
- 51: Anbringabschnitt
- 51 a: Wandabschnitt
- 52: Aufnahmeabschnitt
- 52a: Wandabschnitt
- 53: Durchgangsöffnung

- 60: Seitendichtungsprofil
- 60: Befestigungsteil
- 61 a: Anbringabschnitt

- 70: Klemmfeder
- 71: Befestigungsabschnitt
- 71 a: Durchgangsöffnung

- 80: Abdeckprofil
- 81: Führungsabschnitt

- x: Koordinatenrichtung
- y: Koordinatenrichtung
- z: Koordinatenrichtung

## Patentansprüche

1. Profilverbinder (20, 30), aufweisend
• eine Basis (21, 31) und
• zwei elastisch verformbare Vorsprünge (22,32), die von der Basis (21, 31) abgehen und sich in eine selbe Richtung (+x) erstrecken,
**dadurch gekennzeichnet, dass**
• die Basis (21, 31) Ausnehmungen (21 b) oder Schlitze (31 b) aufweist, die an dem jeweiligen der zwei Vorsprünge (22,32) angrenzen und die Ausnehmungen (21b) oder Schlitze (31b) sich in Richtung von den Vorsprüngen (22, 32) weg erstrecken.

2. Profilverbinder gemäß Anspruch 1, wobei die Basis (11, 21, 31) in Abschnitten, von denen kein Vorsprung (12, 12; 22, 22; 32, 32) abgeht, Durchgangsöffnungen (11a, 21 a, 31 a) aufweist, die sich parallel zu einer Erstreckungsrichtung der zumindest zwei Vorsprünge (12, 12; 22, 22; 32, 32) erstrecken.

3. Profilverbinder gemäß einem der vorhergehenden Ansprüche, wobei
• die Basis (11, 21, 31) aus Metall oder Kunststoff gebildet ist und
• die zumindest zwei Vorsprünge (12, 22, 32) jeweils aus Metall oder Kunststoff gebildet sind.

4. Profilverbinder gemäß einem der vorhergehenden Ansprüche, wobei zumindest einer der zumindest zwei Vorsprünge (12) eine Durchgangsöffnung (13a) aufweist, die sich parallel zu einer Erstreckungsrichtung des jeweiligen Vorsprungs (12) erstreckt.

5. Profilverbinder gemäß Anspruch 4, wobei zumindest ein Vorsprung (12, 13a), der eine Durchgangsöffnung (11 a) aufweist, einen Schlitz (13b) und/oder einen im Querschnitt dünner ausgebildeten Bereich aufweist, der bzw. die sich parallel zu der Erstreckungsrichtung dieses Vorsprungs (12) erstreckend ausgebildet ist bzw. sind.

6. Profilverbinder gemäß einem der Ansprüche 2 bis 5, wobei zumindest eine der zumindest einen Durchgangsöffnung (11 a, 13a; 21a; 31a) ein Innengewinde aufweist.

7. Profilverbinder gemäß einem der vorhergehenden Ansprüche, wobei die zumindest zwei Vorsprünge (22, 32) an von der Basis (21, 31) entfernten Enden verjüngte Endabschnitte (22a, 32a) aufweisen.

## Claims

1. A profile connector (20, 30), including
• a base (21, 31), and
• two elastically deformable projections (22, 32), which start at the base (21, 31) and extend in a same direction (+x),
**characterized in that**
• the base (21, 31) has recesses (21b) or slots (31b), which border the respective one of the two projections (22, 32), and the recesses (21 b) or the slots (31b) extend in the direction away from the projections (22, 32).

2. The profile connector according to claim 1, wherein, in sections, in which no projection (12, 12; 22, 22; 32, 32) starts, the base (11, 21, 31) has through-openings (11a, 21a, 31a) which extend parallel to an extension direction of the at least two projections (12, 12; 22, 22; 32, 32).

3. The profile connector according to any of the preceding claims, wherein
• the base (11, 21, 31) is made from metal or plastic material, and
• the at least two projections (12, 22, 32) are respectively made from metal or plastic material.

4. The profile connector according to any of the preceding claims, wherein at least one of the at least two projections (12) includes a through-opening (13a), which extends parallel with regard to an extension direction of the respective projection (12).

5. he profile connector according to claim 4, wherein a projection (12, 13a), which includes a through-opening (11a), includes a slot (13b) and/or an area with a diameter configured to be smaller, which is/are configured to extend parallel to the extension direction of this projection (12).

6. The profile connector according to any of the claims 2 to 5, wherein at least one of the at least one through-opening (11a, 13a; 21 a; 31 a) includes a female thread.

7. The profile connector according to any of the preceding claims, wherein the at least two projections (22, 32) include terminal sections (22a, 32a), which, at the distal ends with regard to the base (21, 31), are tapered.

## Revendications

1. Connecteur de profilés (20, 30), comprenant
• une base (21, 31), et
• deux saillies (22, 32) élastiquement déformables qui partent à la base (21, 31) et s'étendent en une même direction (+x),
**caractérisé en ce que**
• la base (21, 31) comprend des décrochements (21 b) ou des fentes (31 b), qui sont avoisinants à la saillie respective des deux saillies (22, 32), et les décrochements (21 b) ou fentes (31 b) s'étendent en direction en s'éloignant des saillies (22, 32).

2. Connecteur de profilés selon la revendication 1, dans lequel la base (11, 21, 31), dans des sections où aucune saillie (12, 12 ; 22, 22 ; 32, 32) part, comprend des ouvertures de passage (11a, 21 a, 31 a), qui s'étendent parallèlement par rapport à une direction d'extension des au moins deux saillies (12, 12 ; 22, 22 ; 32, 32).

3. Connecteur de profilés selon l'une des revendications précédentes, dans lequel
• la base (11, 21, 31) est fait de métal ou de matière plastique, et
• lesdites au moins deux saillies (12, 22, 32) sont respectivement faites de métal ou de matière plastique.

4. Connecteur de profilés selon l'une des revendications précédentes, dans lequel une desdites au moins deux saillies (12) comprend une ouverture de passage (13a) qui s'étend parallèlement par rapport à une direction d'extension de la saillie (12) respective.

5. Connecteur de profilés selon la revendication 4, dans lequel au moins une saillie (12, 13a), qui comprend une ouverture de passage (11a), comprend une fente (13b) et/ou une région aménagée avec une coupe transversale plus mince, laquelle est aménagée, respectivement lesquelles sont aménagées à s'étendre en parallèle par rapport à la direction d'extension de cette saillie (12).

6. Connecteur de profilés selon l'une des revendication 2 à 5, dans lequel au moins une des au moins une ouverture de passage (11a, 13a ; 21 a ; 31 a) comprend un taraudage.

7. Connecteur de profilés selon l'une des revendications précédentes, dans lequel au moins deux saillies (22, 32), aux extrémités éloignées de la base (21, 31), présentent des sections terminales (22a, 32a) rétrécies.
